# EUROPEAN PATENT SPECIFICATION

(11) **EP 3 374 078 B1**
(45) Date of publication and mention of the grant of the patent: **14.08.2019**
(21) Application number: 16810105.3
(22) Date of filing: 21.10.2016
(51) Int. Cl.: B01J 20/08, B01J 20/20, B01J 20/30, B01J 20/32, C10G 25/00, C22B 7/00

(54) **PRODUCTION METHOD OF AN ADSORBENT MATERIAL FOR ADSORBING SULFUR COMPOUNDS**
HERSTELLUNGSVERFAHREN FÜR EIN ADSORPTIONSMATERIAL ZUR ADSORPTION VON SCHWEFELVERBINDUNGEN
PROCÉDÉ DE PRODUCTION D'UN MATÉRIAU ADSORBANT POUR ADSORBER DES COMPOSÉS SOUFRÉS

(30) Priority: 09.11.2015 TR 201513980
(43) Date of publication of application: 19.09.2018
(73) Proprietor: Turkiye Petrol Rafinerileri Anonim Sirketi Tupras, 41780 Korfez/Kocaeli (TR)
(72) Inventor: YASAR, Muzaffer, 34320 Istanbul (TR); CANIAZ, Ramazan Oguz, 41790 Kocaeli (TR); CETINTAS, Refika, Kocaeli (TR); ARCA, Serhat, Alikahya/Kocaeli (TR); BASKENT, Emel, 41040 Izmit/Kocaeli (TR)
(74) Representative: Cayli, Hülya
(86) International application number: PCT/TR2016/050391
(87) International publication number: WO 2017/082842

(56) References cited:
- EP-A1- 2 889 278
- DE-A1- 4 102 557
- US-A1- 2011 223 082
- US-A1- 2015 196 893

## Description

### Field of Invention

The present invention relates to a production method of an an adsorbent material for the safe removal of sulfur compounds, e.g. hydrogen sulfide (H₂S), carbonyl sulfide (COS), carbon disulfide (CS₂) mercaptans (RSH), sulfide (R-S-R) and disulfide (R-S-S-R) from their gaseous environment.

### Prior Art

During refinery and petrochemistry processes, various sulfur compounds, such as hydrogen sulfide (H₂S). carbonyl sulfide (COS), carbon disulfide (CS₂). mercaptans (RSH). sulfide (R-S-R) and disulfide (R-S-S-R) can be released. Among said sulfur compounds, particularly H₂S is a toxic gas endangering the living beings at low concentration ranges such as 15-100 ppm. In addition to endangering the health of living beings, said sulfur compounds are also poisonous for catalysts and highly corrosive for metallic structures which are employed in refinery processes. For this reason, the removal of sulfur compounds from their environment as well as bringing them into an inert state by means of various chemical reactions are significant, in terms of both the living beings and the environment and the efficiency and safety of industrial activities in the relevant field of activity.

According to the prior art, various adsorbents have been used for safely removing sulfur compounds from their gaseous environment. In one embodiment according to the prior art, activated carbon is used as an adsorbent of sulfur compounds. However, the maximum breakthrough capacity of activated carbons for the H₂S gas, for instance, is quite lower than that for many organic vapors. Therefore, activated carbons are typically first treated with various chemical, and then used as adsorbents for sulfur compounds. As disclosed also in the patent documents US4072479A and US5024682A according to the prior art, activated carbon is treated with chemicals such as sodium hydroxide (NaOH) or potassium hydroxide (KOH) to provide an adsorbent for sulfur compounds. Caustic-treated activated carbon, however, reaches its maximum breakthrough capacity in a short period of time. This, in turn, requires reactivation, regeneration or the entire replacement of the respective material, incurring costs and leading to a loss of time. Besides treating activated carbon with chemicals such as NaOH or KOH, the patent document US 5024682 A describes a process by which ammonia is added to a gas stream containing H₂S and oxygen such that an improvement is provided in the useful life of activated carbon Thus, the breakthrough capacity of activated carbon for H₂S is reportedly increased from 0.12 g H₂S/cm³ to 0.16 H₂S/cm³, namely a 1.33 fold increase is reportedly obtained.

Other patent documents US 4455286 A and WO 2004052497 A2 according to the prior art disclose methods for removing (adsorbing) gases containing H₂S or other sulfur compounds from their environment by means of metal oxides.

The document US 4455286 A, in turn, discloses a method for removing gases containing H₂S and other sulfur compounds from high-temperature gaseous fuels by the use of a mixture of copper oxide-zinc oxide in the form of a sorbent material. According to that method, copper oxide is first reduced to elemental copper and then dispersed through zinc oxide to increase the sorption capacity towards sulfur compounds

Another patent document WO 2004052497 A2 discloses a process for preparing an activated carbon-metal oxide filter material. That filter material is used for removing acidic gases and volatile organic compounds from gaseous mixtures. According to that document the H₂S breakthrough capacity is found as 0.27-0.35 g H₂S/cm³ in experiments conducted using said activated carbon-metal oxide filter material. Thus, according to the previous documents, it becomes clear that the breakthrough capacities of currently-available adsorbents for sulfur compounds are low, that novel materials with higher adsorption capacities are required, and that such adsorbents should be developed which should reduce the amount of sulfur compounds released during vanous processes below levels which would not be harmful for living beings.

The US 2011/223082 discloses a sorbent which is produced by activating a precursor in the presence of a chemical to produce a chemically-enhanced activated sorbent for increased adsorption of a gaseous pollutant. The sorbent precursor may be a raw carbonaceous material such as coal, wood, petroleum coke, biomass materials, sewage sludge, organic wastes or others. The activation gas may be a flue gas comprised of air, water vapor, carbon dioxide and other components.

The EP 2 889 278 discloses the extraction of metals from red mud residue. The filtrate obtained after extraction of the metals from red mud may be employed in different applications, such as preparation of catalysts.

### Brief Description of Invention

According to the present invention, a production method for an adsorbent material is developed. The obtained adsorbent material is intended to remove sulfur compounds from their gaseous environment. The adsorbent produced by the method according to the present invention comprises a porous petcoke (i.e. petroleum coke) of which the surface area is increased by reacting the same with carbon dioxide CO₂ and water vapor under high temperature, and metals extracted by treating red mud in a concentrated acidic medium and adsorbed on the surface of said petcoke.

The invention relates to a production method for an adsorbent material according to claim 1.

The production method according to the present invention comprises the steps of reacting petcoke with carbon dioxide and water vapor, partially gasifying the petcoke, increasing the surface area of petcoke by generating capillary voids and active centers therein, and then keeping red mud in a concentrated acid solution such that the metals contained therein are extracted, and adsorbing the extracted metals over the surface of porous petcoke of which the surface area was increased accordingly

Since, according to the present invention, metals present in red mud, a side-product of the Bayer process employed in the aluminium industry, are adsorbed on petcoke of which the surface area is increased, an adsorbent is obtained that has a high breakthrough capacity for sulfur compounds. Additionally, the use of red mud, which is a side-product of the Bayer process in the aluminium industry, and of petcoke, which is also a side-product in petroleum refineries, in the adsorbent material produced according to the present invention, makes it possible to utilize environmentally hazardous waste materials in a safe manner.

### Object of Invention

The object of the present invention is to develop a production method of an adsorbent material with high breakthrough capacity to remove sulfur compounds from their gaseous environment. In the production method according to the invention, side-products of different industries, e.g. aluminium production industry and petroleum refinery industry are utilized and turned into a more qualified and functional form.

### Description of Invention

Gases containing sulfur compounds such as H₂S resulting from any kind of chemical and refining processes, particularly in the refinery and petrochemical sector, are hazardous to living beings even at very low amounts. Therefore, said sulfur compounds should be removed from their gaseous environment in a rapid and safe manner. Since conventionally used adsorbents reach their maximum breakthrough capacity in a relatively short period of time, they fail to function adequately. For this reason, an adsorbent material with high breakthrough capacity for gases containing sulfur compounds, as well as a production method thereof is developed according to the present invention.

The adsorbent material prepared by the method according to the present invention makes use of red mud, a side-product of the Bayer process employed in the aluminium industry, and of petcoke, a side-product of petroleum refineries. Red mud is environmentally threatening and produced around 100 million tons per year worldwide. Red mud contains various metal oxides in quite high amounts (pH = 10-14) and therefore it could not be disposed of in a safe manner. Petcoke, used as a carrier- support material according to the present invention in turn, is a carbon-based petroleum product obtained as an undesirable side- product in petroleum refineries and is of very low economic value. Since petcoke, which is used mainly in the form of fuel in power stations and in the cement industry due to its high calorific value, contains sulfur and heavy metals, it leads to the liberation of hazardous gases upon combustion. Therefore, similar to red mud petcoke couid not also be used safety Thus, two side products which are hardly utilized under normal conditions are processed together to provide an adsorbent material for sulfur compounds produced by the method according to the present invention.

The chemical and physical properties of petcoke and red mud are given in tables 1 and 2. respectively

**Table 1: Elemental content and surface area of petcoke, which is a product of petroleum.**

| **Element** | **Weight %** | **BET Analysis** |
|---|---|---|
| Carbon | ≥75 | ∼10 m²/gr |
| Hydrogen | 0,5-5 | |
| Sulfur | ≤8 | |
| Nitrogen | 0,5-3 | |

**Table 2: XRF analysis of red mud which is a side- product of the aluminium industry.**

| **Compound** | **Weight %** |
|---|---|
| **Fe₂O₃** | 30-65 |
| | 10-22 |
| **Al₂O₃ CaO** | 2-10 |
| **TiO₂** | 1-20 |
| **Na₂O** | 1-10 |
| **P₂O₈** | 1-5 |
| **SiO₂** | 5-50 |

The production method of the adsorbent material developed according to the present invention comprises the steps of reacting petcoke with carbon dioxide and water vapor to partially gasify petcoke, increasing the surface area of petcoke by generating capillary voids and active centers therein, and then keeping red mud in a concentrated acid solution such that the metals contained therein are extracted into the aqueous acid solution and adsorbing the extracted metals over the surface of porous petcoke of which the surface area is increased hereby.

The step of increasing the surface area of petcoke during the practice of the present invention comprises the sub-steps of introducing CO₂ gas and water vapor on petcoke (preferably in a quartz tube) at a predefined first temperature (preferably 500-750°C, more particularly 600°C) for a predefined first period of time (e.g. 1 hour): raising the temperature of the medium to a predefined second temperature (preferably 800-1200°C. more particularly 900°C); introducing CO₂ gas and water vapor on petcoke for a predefined second period of time (e.g 3 hours); and cooling the resulting product.

The step of extracting the metal content of red mud by keeping it in a concentrated acid solution according to the present invention comprises the sub-steps of stirring red mud with an acid solution (e.g. hydrochloric acid -5 M HCl solution) at a predefined third temperature (preferably 50-75°C. more particularly 60°C) for a predefined third period of time (e.g 3 hours), and then leaving it to stand under room conditions for a predefined fourth period of time (e.g. 12 hours) so that the metals in red mud are extracted into the solution, filtering the metal-containing mixture such that the red mud residue and the metal-containing filtrate are separated.

The step of adsorbing the metals extracted from red mud onto the surface of petcoke of which the surface area is increased and which is brought into a porous state according to the present invention comprises the sub-steps of adding the metal-containing filtrate on petcoke with increased surface area: stirring it at a predefined fourth temperature (preferably 50-75°C, more particularly 60°) for a predefined fifth period of time (e.g. 3 hours) and leaving the mixture of filtrate and petcoke to stand under room conditions for a predefined sixth period of time (e.g. 12 hours), filtrating the mixture to separate metal-loaded petcoke and filtrate from each other and drying the metal-loaded petcoke (e.g. under a vacuum oven) and calcining it at a predefined fifth temperature (preferably 300-600°C. more particularly 400°C) for a predefined seventh period of time (e.g. 4 hours) to give a sulfur compound adsorbent.

In characterization tests performed for the adsorbent material developed with the present invention, the elements Fe. Al. Cl. Na and Ca were found intensively (see table 3). The adsorbent material, was synthesized by adsorbing the metals intensively found in red mud on the surface of porous petcoke after the metals were extracted using an acid solution. In studies conducted using the adsorbent developed with the present invention, a refinery gas was used, containing a high proportion of sulfur compounds (12% v/v). the so-calied dirty gas. Repeated measurements conducted on a GC-SCO instrument (Gas Chromatography Sulfur Chemiluminescence Detector) showed that the total amount of sulfur compounds in dirty gas was reduced by 99.4% after the gas was passed through the adsorbent material, The adsorbent developed with the present invention can be used in a wide range of fields, e.g. petrol refineries, petrochemical industry, bitumen/asphait industry, waste water treatment facilities.

Since, in the adsorbent material produced by the method according to the present invention, metals extracted from red mud are adsorbed on petcoke of which the surface area is increased, an adsorbent that has a high breakthrough capacity for sulfur compounds is obtained. Additionally, since red mud, a side- product of the Bayer process in the aluminium industry, and petcoke a side- product in petroleum refineries, are used in the adsorbent produced by the method according to the present invention, it is thus ensured that environmentally hazardous side-products are used in a safe manner and turned into a much more qualified/functional product.

**Table 3: XRF analysis of the adsorbent according to the present invention.**

| **Weight %** | **Adsorbent** | **Petcoke** | **Red mud** | **Red mud residue** |
|---|---|---|---|---|
| **Fe₂O₃** | 28.2 | 0.4 | 41,0 | 37,2 |
| **Al₂O₃** | 8,6 | 0.2 | 21,9 | 13,5 |
| **SiO₂** | 1.5 | 0,6 | 15.3 | 12,7 |
| **Na₂O** | 3.9 | - | 10,8 | 3.4 |
| **TiO₂** | 2.0 | - | 5.8 | 6.6 |
| **CaO** | 2,3 | 0,9 | 3,6 | 2,9 |
| **K₂O** | 0,3 | 0,1 | 0,5 | 0,3 |
| **SO₃** | 44.0 | 91,8 | 0,4 | 0.2 |
| **MgO** | 0.2 | - | 0,3 | 0.5 |
| **Cl** | 3.9 | 0,2 | 0.1 | 22,0 |
| **V₂O₅** | 3.5 | 4,7 | - | - |
| **Other** | 1,6 | 1,1 | 0,3 | 0,7 |

## Claims

1. A production method of an adsorbent material, suitable to use for removing sulfur compounds released in petroleum refineries, petrochemical facilities and in any kind of chemical and refining processes from their gaseous environment, comprising porous petcoke and metals extracted by treating red mud in 5M hydrochloric acid solution medium and adsorbed on the surface of petcoke, **characterized by** comprising the steps of:
- introducing carbon dioxide gas and water vapor on petcoke in an enclosed medium at the first temperature from 500 to 760°C for a first period of time which is 1 hour;
- raising the temperature of the medium to a second temperature from 800 to 1200°C;
- Introducing carbon dioxide gas and water vapor on petcoke for a second period of time which is 3 hours;
- cooling the resulting product after the second period of time to react petcoke with carbon dioxide and water vapor, to partially gasify the petcoke,
- to increase the surface area of petcoke;
- bringing together red mud with an acid solution at a third temperature from 50 to 75°C and stirring it for a third period of time which is 3 hours and then leaving it to stand under room conditions for a fourth period of time which is 12 hours so that the metals in red mud are extracted into the solution;
- filtering the metal-containing mixture such that the red mud residue and the metal-containing filtrate are separated from each other;
- adding the metal-containing filtrate on petcoke with an increased surface area;
- stirring it at a fourth temperature from 50 to 75°C for a fifth period of time which is 3 hours and leaving the mixture of filtrate and petcoke to stand under room conditions for a sixth period of time which is 12 hours;
- filtering the mixture to separate metal-loaded petcoke and filtrate from each other and
- drying the metal-loaded petcoke and calcining it at a fifth temperature from 300 to 600°C for a seventh period of time which is 4 hours to give an adsorbent material.

2. The production method according to claim 1, **characterized in that** said enclosed medium is a quartz tube.

3. The production method according to claim 1, **characterized in that** the predefined first temperature is 600°C.

4. The production method according to claim 1, **characterized in that** the predefined second temperature is 900°C.

5. The production method according to claim 1, **characterized in that** the predefined third temperature is 60°C.

6. The production method according to claim1, **characterized in that** the predefined fourth temperature is 60°C.

7. The production method according to claim 1, **characterized in that** the drying procedure is conducted in a vacuum oven.

8. The production method according to claim 1, **characterized in that** the predefined fifth temperature is 400°C.

## Patentansprüche

1. Herstellungsverfahren für ein adsorbierendes Material, das dazu geeignet ist, um Schwefelverbindungen, die in Erdölraffinerien, petrochemischen Anlagen und jeder Art von chemischen oder raffinierenden Prozessen freigesetzt werden, aus deren gasförmigen Umgebungen zu entfernen, wobei das Material porösen Petrolkoks und Metalle aufweist, die extrahiert worden sind durch Behandlung von Rotschlamm in 5-molarem Salzsäure-Lösungsmittel und die an der Oberfläche des Petrolkokses adsorbiert sind, **gekennzeichnet durch** die Schritte:
- Zuführen von Kohlendioxidgas und Wasserdampf zu dem Petrolkoks in einer eingeschlossenen Umgebung bei der ersten Temperatur von 500 bis 750°C für eine erste Zeitperiode, die eine Stunde beträgt,
- Erhöhen der Temperatur der Umgebung auf eine zweite Temperatur von 800 bis 1.200°C,
- Zuführen von Kohlendioxidgas und Wasserdampf zu dem Petrolkoks für eine zweite Zeitperiode, die drei Stunden beträgt,
- Kühlen des resultierenden Produktes nach der zweiten Zeitperiode, um Petrolkoks mit Kohlendioxid und Wasserdampf reagieren zu lassen, um den Petrolkoks wenigstens teilweise in Gas umzuwandeln,
- um die Oberfläche des Petrolkokses zu vergrößern,
- Zusammenbringen von Rotschlamm und einer sauren Lösung bei einer dritten Temperatur von 50 bis 75°C und Verrühren für eine dritte Zeitperiode, die drei Stunden beträgt, und dann Stehenlassen unter Raumbedingungen für eine vierte Zeitperiode, die 12 Stunden beträgt, so dass Metalle im Rotschlamm in die Lösung extrahiert werden,
- Filtern des Metalle enthaltenden Gemisches, so dass Rotschlamm-Restbestandteile und das Metalle enthaltende Filtrat voneinander getrennt werden,
- Hinzufügen des Metalle enthaltenden Filtrats auf den Petrolkoks mit einer vergrößerten Oberfläche,
- Umrühren bei einer vierten Temperatur von 50 bis 75°C für eine fünfte Zeitperiode, die drei Stunden beträgt, und Stehenlassen des Gemisches aus Filtrat und Petrolkoks unter Raumbedingungen für eine sechste Zeitperiode, die 12 Stunden beträgt,
- Filtern des Gemisches, um mit Metall beladenem Petrolkoks und Filtrat voneinander zu trennen, und
- Trocknen des mit Metall beladenen Petrolkokses und Kalzinieren bei einer fünften Temperatur von 300 bis 600°C für eine siebte Zeitperiode, die vier Stunden beträgt, um ein adsorbierendes Material zu erhalten.

2. Herstellungsverfahren nach Anspruch 1, **dadurch gekennzeichnet, dass** die eingeschlossene Umgebung eine Quarzröhre ist.

3. Herstellungsverfahren nach Anspruch 1, **dadurch gekennzeichnet, dass** die vordefinierte erste Temperatur 600°C beträgt.

4. Herstellungsverfahren nach Anspruch 1, **dadurch gekennzeichnet, dass** die vorgegebene zweite Temperatur 900°C beträgt.

5. Herstellungsverfahren nach Anspruch 1, **dadurch gekennzeichnet, dass** die vordefinierte dritte Temperatur 60°C beträgt.

6. Herstellungsverfahren nach Anspruch 1, **dadurch gekennzeichnet, dass** die vordefinierte vierte Temperatur 60°C beträgt.

7. Herstellungsverfahren nach Anspruch 1, **dadurch gekennzeichnet, dass** der Vorgang des Trocknens in einem Vakuumofen durchgeführt wird.

8. Herstellungsverfahren nach Anspruch 1, **dadurch gekennzeichnet, dass** die vordefinierte fünfte Temperatur 400°C beträgt.

## Revendications

1. Procédé de production d'un matériau adsorbant adapté pour éliminer des composés soufrés libérés dans des raffineries de pétrole, des installations pétrochimiques et dans tout type de processus chimiques et de raffinage à partir de leur environnement gazeux, comprenant du coke de pétrole poreux et des métaux extraits par traitement de boue rouge dans un milieu de solution d'acide chlorhydrique 5M et adsorbés sur la surface de coke de pétrole, **caractérisé en ce qu'**il comprend les étapes consistant à :
- introduire du dioxyde de carbone gazeux et de la vapeur d'eau sur du coke de pétrole dans un milieu clos à la première température allant de 500 à 750 °C pendant une première période de temps qui est de 1 heure ;
- élever la température du milieu à une deuxième température allant de 800 à 1 200 °C ;
- introduire du dioxyde de carbone gazeux et de la vapeur d'eau sur du coke de pétrole pendant une deuxième période de temps qui est de 3 heures ;
- refroidir le produit résultant après la deuxième période de temps pour faire réagir le coke de pétrole avec le dioxyde de carbone et la vapeur d'eau, afin de gazéifier partiellement le coke de pétrole,
- augmenter la surface superficielle du coke de pétrole ;
- mettre ensemble la boue rouge avec une solution acide à une troisième température allant de 50 à 75 °C et la remuer pendant une troisième période de temps qui est de 3 heures et laisser ensuite reposer sous des conditions ambiantes pendant une quatrième période de temps qui est de 12 heures de sorte que les métaux dans la boue rouge sont extraits dans la solution ;
- filtrer le mélange contenant des métaux de telle sorte que le résidu de boue rouge et le filtrat contenant des métaux sont séparés l'un de l'autre ;
- ajouter le filtrat contenant des métaux sur le coke de pétrole ayant une surface superficielle augmentée ;
- le remuer à une quatrième température allant de 50 à 75 °C pendant une cinquième période de temps qui est de 3 heures et laisser le mélange de filtrat et de coke de pétrole au repos sous des conditions ambiantes pour une sixième période de temps qui est de 12 heures ;
- filtrer le mélange pour séparer l'un de l'autre le coke de pétrole chargé de métaux et le filtrat et
- sécher le coke de pétrole chargé de métaux et le calciner à une cinquième température allant de 300 à 600 °C pendant une septième période de temps qui est de 4 heures pour obtenir un matériau adsorbant.

2. Procédé de production selon la revendication 1, **caractérisé en ce que** ledit milieu clos est un tube de quartz.

3. Procédé de production selon la revendication 1, **caractérisé en ce que** la première température prédéfinie est de 600 °C.

4. Procédé de production selon la revendication 1, **caractérisé en ce que** la deuxième température prédéfinie est de 900 °C.

5. Procédé de production selon la revendication 1, **caractérisé en ce que** la troisième température prédéfinie est de 60 °C.

6. Procédé de production selon la revendication 1, **caractérisé en ce que** la quatrième température prédéfinie est de 60 °C.

7. Procédé de production selon la revendication 1, **caractérisé en ce que** la procédure de séchage est effectuée dans un four à vide.

8. Procédé de production selon la revendication 1, **caractérisé en ce que** la cinquième température prédéfinie est de 400 °C.
